(19) Europäisches Patentamt
European Patent Office
Office européen des brevets

(11) Publication number: 0 011 415
B1

(12) **EUROPEAN PATENT SPECIFICATION**

(45) Date of publication of patent specification: 15.08.84

(51) Int. Cl.³: C 08 L 27/06, C 08 J 5/18

(21) Application number: 79302402.7

(22) Date of filing: 01.11.79

(54) **Vapour barrier films.**

(30) Priority: 03.11.78 US 957389

(43) Date of publication of application: 28.05.80 Bulletin 80/11

(45) Publication of the grant of the patent: 15.08.84 Bulletin 84/33

(84) Designated Contracting States: BE CH DE FR GB IT NL SE

(56) References cited:
FR - A - 2 378 805
GB - A - 1 534 365
US - A - 3 872 041
US - A - 3 983 290

(73) Proprietor: STAUFFER CHEMICAL COMPANY
Westport Connecticut 06880 (US)

(72) Inventor: Goswami, Jagadish Chandra
14 Capitol Court
New City New York 10956 (US)

(74) Representative: Smith, Sydney et al,
Elkington and Fife High Holborn House 52/54
High Holborn
London WC1V 6SH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 011 415 B1

**Description**

The present invention relates to a film forming composition which can be utilized to make vapour barrier films suitable for use in building construction and vapor barrier film so formed.

Vapor barrier films are specialized products which are commonly used in building construction to retard the transmission of water vapor into or from the interior of the building. They should have a balance of the following characteristics: a low water vapor transmission value; good flame retardance and low smoke generation properties; good low temperature flexibility; good tensile and tear strength; and easy processibility for such forming operations as calendering, extrusion casting, extrusion blow molding, and solvent casting.

One approach to making such films has been the use of an externally plasticized vinyl chloride polymer resin as the polymer component of such films in conjunction with appropriate amounts of flame retardants, fillers, lubricants, stabilizers, and like ingredients (e.g., see Film No. 1 in Table 1 of U.S. Patent No. 3,983,290). Although such films show resistance to water vapor transmission, the presence of externally added plasticizer gives rise to the possibility of plasticizer migration and resulting embrittlement of the product with the passage of time.

Another approach to forming such films has been to incoporate chlorinated polyethylene in the polymer component, together with the vinyl chloride polymer, in an effort to reduce the amount of plasticizer needed in the composition. The presence of plasticizer is believed to contribute to water vapor transmission in vapor barrier films (see, *Kogyo Kagaku Zasshi,* Vol. 64, 349—355 (1961), abstracted in *Chem. Abstr.* Vol. 57, 4875 f). Some recent examples of vapor barrier film constructions of this type are shown in: U.S. Patent No. 3,983,290; Belgian Patent No. 855,443; and U.S. Patent No. 3,872,041.

In our FR—A—2378805, there are described internally plasticized vinyl chloride copolymers which can be used in accordance with the present invention. The copolymers comprise from 50 to 85%, by weight, of vinyl chloride, from 3 to 47%, by weight, of $C_6$—$C_{10}$ alkyl acrylate and from 47 to 3%, by weight, of a bis(hydrocarbyl)vinylphosphonate. This specification does not dissolve or suggest vapor barrier films of the type used in building construction.

The present invention provides the use in building contruction as a vapor barrier having a tensile strength of from 100 to 250 kg./cm.$^2$; a tear strenght (kg./m. x $10^{-2}$) of from 30 to 65; a Shore "A" hardness of from 77 to 95; a maximum permeance of 1.2, when tested in accordance with ASTM E-96-6; Method A; a Clash Berg temperature of from 0° to about −25°C; a Limiting Oxygen Index of from 29 to 31; and NBS smoke generation values of from 15 to 40 Dm/gm in the smoldering mode and from 30 to 60 Dm/gm in the flaming mode of a calenderable, flame-retardant, heat-stabilized film-forming composition comprising:

(a) from 40 to 70%, by weight, of a polymer component comprising in excess of 45%, by weight, of the polymer component, of an internally plasticized vinyl chloride copolymer resin, having a Shore "A" hardness from 85 to 95, which comprises vinyl chloride, a $C_6$—$C_{10}$ alkyl acrylate and a bis(hydrocarbonyl) vinylphosphonate; and

(b) from 1 to 15%, by weight, of at least one flame retardant.

A preferred internally plasticized resin for such use comprises from 50 to 85%, by weight, vinyl chloride, from 3 to 47%, by weight of a $C_6$—$C_{10}$ alkyl acrylate and from 47 to 3%, by weight of a bis(hydrocarbyl)vinylphosphonate.

The film forming composition typically comprises the following components:

a) from 40 to 70%, by weight, of the composition of a polymer component comprising a predominant amount, that is, in excess of approximately 45%, by weight of the polymer component, of an internally plasticized vinyl chloride copolymer resin, having a Shore "A" hardness of from 85 to 95, which comprises vinyl chloride, a $C_6$—$C_{10}$ alkyl acrylate and a bis(hydrocarbyl) vinylphosphonate which will be described in greater detail below;

b) from 0 to 35%, by weight of the composition, of at least one filler material;

c) from 1 to 15%, by weight of the composition, of at least one flame retardant; and

d) from 5 to 35%, by weight of the composition, of at least one functional additive selected from the heat and ultraviolet stabilizers, lubricants and processing aids, for example.

The major component of the film forming composition is a polymer component which comprises a predominant amount e.g. in excess of 45%, by weight, of an internally plasticized resin, which when combined in an effective amount with the other ingredients of the said compositions, yields a composition which can be used to form a film having the physical characteristics specified which indicate, inter alia; low water vapor transmission, good flame retardancy and low smoke generation; and good low temperature flexibility.

One preferred internally plasticized vinyl chloride resin for use in the present invention is a copolymer of: (1) from 50% to 85% by weight of the copolymer, of vinyl chloride; (2) from 3% to 47% by weight of the copolymer, of a $C_6$—$C_{10}$ alkyl acrylate; and (3) from 47% to 3%, by weight of the copolymer, of a bis(hydrocarbyl) vinylphosphonate, as described in FR—A—2378805.

A particularly preferred internally plasticized vinyl chloride resin is a terpolymer of from 73% to 75% by weight vinyl chloride, from 17% to 19% by weight of a $C_6$—$C_{10}$ alkyl acrylate, and from 7% to 9% by weight of a bis(hydrocarbyl) vinylphosphonate. This has a Shore "A" hardness within the range

of 85 to 95, which is particularly advantageous when calendering is to be used for the production of the vapor barrier film.

Representative $C_6$—$C_{10}$ alkyl acrylates which can be used in forming the internally plasticized resin which can be used in the compositions of the present invention include: n-hexyl acrylate, n-octyl acrylate, 2-ethylhexyl acrylate, and mixtures of the foregoing acrylates. The $C_8$—$C_{10}$ alkyl acrylates are preferred for use, especially those containing branched alkyl groups, for example 2-ethylhexyl acrylate, since such branched alkyl groups give better physical properties (e.g. low temperature flexibility and good tensile strength) to the resulting composition containing the copolymer.

The terminology "bis (hydrocarbyl) vinylphosphonate", as used in the present specification is meant to encompass vinylphosphonates having the formula:

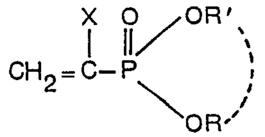

where X is selected from hydrogen, halogen, cyano, aryl, such as phenyl, $C_1$—$C_{18}$ alkyl and

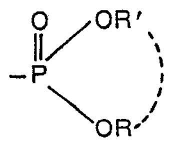

where R and R′ are hydrocarbonyl and substituted hydrocarbyl groups consisting essentially of hydrogen and carbon, and containing up to about 18 carbon atoms, inclusive, with the proviso that R and R′ may be the same, different or conjoint, i.e., R and R′ may combine to form one single radical.

The use, in this disclosure, of the expression "hydrocarbyl" and "substituted hydrocarbyl groups" in the definition of the suitable bis(hydrocarbyl)vinylphosphonates refers to the radicals obtained upon the removal of a hydrogen atom from a hydrocarbon group or substituted hydrocarbon group, which may be either an aliphatic or aromatic group. These hydrocarbyl groups may be substituted with any non-interferring groups, i.e., with any group which does not interfere with the polymerization of the bis-(hydrocarbyl)vinylphosphonate. Such substituent groups include, for example, chloro, bromo, fluoro, nitro, hydroxy, sulfone, ethoxy, methoxy, nitrile, ether, ester, and ketone groups.

Illustrative of the aliphatic and aromatic groups as represented by R and R′ in the above-described structure of the bis(hydrocarbyl)vinylphosphonate are alkyl groups, such as methyl, ethyl, propyl, butyl, pentyl, hexyl, and nonyl, alkenyl groups, such as pentenyl and hexenyl, including all of their respective isomers; cycloalkyl groups, such as cyclopropyl, cyclobutyl, cyclopentyl, and cyclohexyl; cycloalkenyl groups, such as cyclohexenyl; and aryl groups, such as, phenyl, benzyl, phenethyl, tolyl, and naphthyl.

Representative of the above-defined bis(hydrocarbyl)vinylphosphates are:

Bis(beta-chloroethyl)vinylphosphonate;
Bis(2-ethylhexyl)vinylphosphonate;
Bis(beta-chloropropyl)vinylphosphonate;
Bis(beta-chloroethyl) 1-methylvinylphosphonate;
Bis(beta-chloroethyl) 1-cyanovinylphosphonate;
Bis(beta-chloroethyl) 1-chlorovinylphosphonate;
Bis(beta-chloroethyl) 1-phenylvinylphosphonate;
Dimethyl vinylphosphonate;
Diethyl vinylphosphonate;
Bis(omega-chlorobutyl)vinylphosphonate;
Di-n-butyl vinylphosphonate;
Di-isobutyl vinylphosphonate;
Bis(2-chloroisopropyl) 1-methylvinylphosphonate;
Diphenyl vinylphosphonate; and
Bis(2,3-dibromopropyl)vinylphosphonate

From the above group of bis(hydrocarbyl)vinylphosphonate monomers, it is preferred to employ bis(bets-chloroethyl)vinylphosphonate in preparing the internally plasticized polymers in the compositions of the present invention, since this monomer is a commercially available material and is currently lower in cost than any of the other bis(hydrocarbonyl) vinylphosphonates. Bis(2-ethylhexyl)-vinylphosphonate is also a preferred monomer since it gives a vinyl film having good flexibility even at very low temperatures.

Compatible mixtures of the respective alkyl acrylates and of the vinylphosphonates can be used, if desired.

The type of internally plasticized copolymer, described above, which is useful in the compositions of the present invention can be formed using conventional bulk, emulsion, suspension, and solution polymerization procedures. Suspension polymerization is preferred since it avoids the problems of isolation of the product from the latex that is produced using emulsion polymerization techniques, the heat of reaction is more readily removed as compared to bulk polymerization procedures, and no solvent recovery is needed as in the solution polymerization.

Suspension polymerization reaction mixtures comprise from about 20% to about 45%, by weight, based on the amount of water, of the above-enumerated monomers in an aqueous reaction medium. Also included are from about 0.05% to about 5%, by weight, based on the weight of monomers, of a suspending agent, such as methyl cellulose, hydroxypropyl methyl cellulose, gelatine, and the like; from about 0.005% to about 1%, by weight, based on the amount of monomer, of at least one monomer-soluble initiator, such as azobisisobutyronitrile, lauroyl peroxide, benzoyl peroxide, or isopropyl peroxydicarbonate. The polymerization reaction is conducted by heating the reaction medium containing the above components to a sufficient temperature and for a sufficient length of time, e.g., from about 35°C. to about 75°C. for about 12 hours, to affect the desired polymerization, with agitation being applied throughout the course of the reaction. As is well known in the art, the use of the more active of the above-mentioned initiators will require use of either a lower temperature or shorter reaction time, or both, whereas use of a less active initiator may require more vigorous reaction conditions. If desired, the molecular weight of the polymers can be regulated by adding an effective amount of a chain transfer agent during the polymerization. Generally from about 0.01 to about 0.1%, by weight of the monomers, of the chain transfer agent can be added, if desired. Representative chain transfer agents include the chlorinated hydrocarbons, e.g., tetrachloroethane, trichloroethane and carbon tetrachloride, and mercaptans of the formula RSH, where R is an alkyl group, e.g., a $C_1$—$C_{12}$ alkyl group, such as butyl or dodecyl.

If emulsion polymerization is to be employed, the above-described suspending agent is replaced with from agbout 0.2% to about 2%, by weight, of an emulsifying agent, such as sodium lauryl sulfate, potassium stearate, an alkyl benzene sulfonate, an ammonium dialkyl sulfosuccinate, and the monomer soluble initiator is replaced with from about 0.1% to about 1%, by weight, of a water-soluble initiator, such as an alkali metal persulfate, perborate or peracetate, ammonium persulfate, perborate, a urea peroxide, hydrogen peroxide, tertiary butyl hydroperoxide, and the like. If desired, a redox initiator system, such as ammonium persulfate and sodium bisulfite, or hydrogen peroxide and ascorbic acid, can also be used as the initiator. Polymerization is carried out at similar temperatures and over similar times as those used in suspension polymerization.

If bulk polymerization is employed, the monomers serve as the solvent and are polymerized in the presence of the above-described amounts of the monomer-soluble catalysts under the same general temperature and time conditions described above in connection with suspension and emulsion polymerization.

If solution polymerization is employed, the monomer are polymerized in the presence of at least one inert organic solvent, such as butane, pentane, octane, benzene, toluene, cyclohexanone, acetone, isopropanol, or tetrahydrofuran. The selected initiator should be soluble in the reaction medium. The copolymer can either remain dissolved in the solvent at the end of the polymerization or can be precipitated from the liquid phase during the polymerization. In the former case, the product can be recovered by evaporation of the solvent or by precipitation of the polymer solution by combining it with a non-solvent for the product. The same general reaction conditions used in suspension and emulsion polymerization can be used.

The internally plasticized resin, once isolated from the desired polymerization reaction medium, can then be blended with effective amounts of the various other additives that are needed to yield the type of film forming compositions desired for use in making vapor barrier films.

It is generally desirable for the compositions to contain an amount of filler which is effective in maintaining the desirable properties of the product while at the same time reducing the need for larger amounts of the other components. Such fillers are added in finely divided form to the compositions in the weight amounts described above. Some representative fillers include talc, calcium carbonate, mica, and clay.

The film forming compositions of the present invention contain an effective amount of at least one flame retardant to aid in giving the composition good flame retardancy and low smoke generation characteristics. The weight range described above for this component (1%—15%, by weight of the composition) is representative, and this component is preferably added in finely divided form, as well. Some examples of suitable flame retardants are: antimony trioxide (such as, THERMOGUARD B, from M and T Chemicals); magnesium hydroxide (such as S/G 84 from the Burns and Russel Co.); zinc borate (such as ZB-112, from Humphrey Chemical Corp.); hydrated alumina; and aluminum oxide.

The film forming compositions of the present invention also desirably contain other functional additives which aid in giving the compositions of the present invention the most desirable

characteristics. Examples include such well known additives as: heat and ultraviolet stabilizers, lubricants, processing aids, pigments, such as titanium dioxide.

Representative heat and ultraviolet stabilizers, which may be present at from about 2% to about 10%, by weight of the composition, include octyl epoxy tallate, epoxidized soyabean oil, barium-cadmium-zinc complex salts, organic phosphates, and tin and lead containing compounds.

Representative lubricants, which can be present at from about 1% to about 7%, by weight of the composition, include stearic acid, calcium stearate, polyethylene and stearamide lubricants.

Representative processing aids, which can be present at about 3% to about 25%, by weight of the composition include powdery acrylonitrile-butadiene rubber, chlorinated wax, chlorinated polyethylene, and thermoplastic polyurethane.

The various components of the film formulation, after being combined, can be processed on any conventional mixing apparatus at a sufficiently elevated temperature (e.g., 150°C to 175°C.) and then formed into film products which are useful as vapor barrier films using such well known fabrication techniques as calendering, extrusion casting, extrusion blow molding, and solvent casting.

(Comparative) Example 1

This Example illustrates the formation of a prior art vapor barrier film containing an externally plasticized polyvinyl chloride resin. The following ingredients were used:

| Ingredient | Amount: Parts by Weight | Amount: % |
|---|---|---|
| PVC homopolymer resin (SCC-616 from stauffer Chemical Company) | 80.58 | 42.98 |
| PVC homopolymer resin (SCC-676 from Stauffer Chemical Company) | 19.42 | 10.36 |
| Isodecyl diphenyl phosphate plasticizer | 32.78 | 17.49 |
| Titanium dioxide pigment | 14.60 | 7.79 |
| Epoxidized octyl tallate | 10.21 | 5.45 |
| Antimony oxide flame retardant | 9.10 | 4.87 |
| Magnesium hydroxide filler/ flame retardant | 8.06 | 4.28 |
| Zinc borate flame retardant | 8.02 | 4.28 |
| Ba/Cd heat stabilizer | 1.95 | 1.04 |
| Phosphite chelator | 1.95 | 1.04 |
| Stearic acid lubricant | 0.37 | 0.20 |
| Calcium stearate lubricant | 0.37 | 0.20 |

The formulation formed from mixing the above-described ingredients was processed on a two-roll mill at a temperature of from about 165.6°C. to prepare appropriate specimens for physical property measurements (as set forth in Example 7).

Examples 2—5

These Examples illustrate the formation of four different embodiments of the present invention which contain an internally plasticized resin as the major polymer component or components rather than the externally plasticized resin of Example 1. The abbreviations "pbw" and "%" stand for "parts by weight" and "percentage" (based on the weight of the entire formulation), respectively.

| Ingredients | Example No. 2 pbw | 2 % | 3 pbw | 3 % | 4 pbw | 4 % | 5 pbw | 5 % |
|---|---|---|---|---|---|---|---|---|
| Internally plasticized resin* | 100.0 | 64.1 | 100.0 | 61.65 | 100.0 | 61.46 | 100.0 | 61.46 |
| Titanium dioxide | 14.5 | 9.3 | 14.5 | 8.94 | 14.5 | 8.92 | 14.5 | 8.92 |
| Epoxidized octyl tallate | 11.3 | 7.25 | 7.5 | 4.63 | 8.0 | 4.92 | 8.0 | 4.92 |
| Acrylonitrile-butadiene rubber | — | — | 10.0 | 6.17 | — | — | — | — |
| Internally plasticized resin** | — | — | — | — | 10.0 | 6.15 | — | — |
| Antimony oxide | 9.0 | 5.77 | 9.0 | 5.55 | 9.0 | 5.53 | 9.0 | 5.53 |
| Zinc borate | 8.1 | 5.19 | 8.1 | 4.99 | 8.1 | 4.98 | 8.1 | 4.98 |
| Magnesium hydroxide | 8.1 | 5.19 | 8.1 | 4.99 | 8.1 | 4.98 | 8.1 | 4.98 |
| Tin mercaptide heat stabilizer | 3.0 | 1.92 | 3.0 | 1.85 | 3.0 | 1.84 | 3.0 | 1.84 |
| Partially oxidized poly-ethylene | 1.0 | 0.64 | 1.0 | 0.62 | 1.0 | 0.61 | 1.0 | 0.61 |
| Bisstearamide lubricant | 1.0 | 0.64 | 1.0 | 0.62 | 1.0 | 0.61 | 1.0 | 0.61 |
| Chlorinated wax | — | — | — | — | — | — | 10.0 | 6.15 |

* a suspension grade terpolymer having a relative viscosity of about 2.72 and containing about 73.6%, by weight, vinyl chloride, about 18.2% by weight, 2-ethylhexyl acrylate, and about 8.2%, by weight, of bis(beta-chloroethyl) vinylphosphonate.

** a suspension grade terpolymer having a relative viscosity of about 2.9 and containing about 73.2%, by weight, vinyl chloride, about 19.4% by weight, 2-ethylhexyl acrylate, and about 7.4%, by weight, bis(beta-chloroethyl) vinylphosphonate.

Each of the above-described formulations was processed as described in Comparative Example 1 and appropriate test specimens are also formed as described in that Example.

Example 6

The film products of Example 1—5 were tested for various physical properties using a variety of standard test procedures. The table given below sets forth the results:

| Property | Film No. 1* | 2 | 3 | 4 | 5 |
|---|---|---|---|---|---|
| Clash-Berg Temp. (°C.) (38 mil film) | −13 | −12 | −7 | −5 | −11 |
| Graves Tear Str. (kg./m. x $10^{-2}$) | 53.19 | 36.06 | 53.37 | 51.41 | 51.41 |
| Tensile Str. at Break (kg/cm$^{2}$) | 157.49 | 112.78 | 137.10 | 146.17 | 138.23 |
| Elongation at break (%) | 141 | 144 | 194 | 104 | 132 |
| Shore "A" Hardness (10 sec.) | 86 | 85 | 88 | 91 | 88 |

* Prior art film.

The Clash-Berg temperature measures the end point of flexibility for the sample, as defined by Clash and Berg in their studies of low temperature flexibility. It is the temperature at which the apparent modulus of elasticity of the specimen is 9491.85 kg/cm$^2$. Lower temperature values indicate a greater degree of low temperature flexibility.

The Graves tear strength (ASTM D-1004) gives a measure of the force needed to tear a specimen 0.1 to 0.127 cm. in thickness. Higher values are indicative of a tougher, harder to tear film, and are desired.

The tensile strength at break is the maximum tensile stress sustained by a specimen during a tension test (ASTM D-882).

The percent elongation at break is a measure of the increase in length of the test specimen at the instant before rupture occurs (ASTM D-882). Percent elongation is expressed as the increase in distance between two gauge marks at rupture divided by the original distance between the marks, the quotient being multiplied by 100.

Shore "A" hardness is a measure of the indentation hardness of the specimen and is measured on the Shore "A" durometer after 10 seconds (ASTM D-2240). This instrument comprises a spring loaded indentor point with a load of 822 grams projecting through a hole in a presser foot. The device has a scale which indicates the degree of penetration into the plastic test specimen beyond the face of the foot. The scale ranges from 0 (for 0.254 cm. pentration) to 100 (for zero penetration).

When Film Nos. 1 and 2 were burned in the NBS smoke chamber under both the flaming and smoldering modes, the following results were obtained, with lower numbers being more desirable:

| Flaming Mode | Film No. 1* | 2 |
|---|---|---|
| Dm/gm of orig. sample | 46 | 35 |
| Dm/gm of material burned | 78 | 62 |
| Smoldering Mode | | |
| Dm/gm of orig. sample | 23 | 18 |
| Dm/gm of material burned | 52 | 35 |

* Prior art film

The NBS smoke chamber (see D. Gross, J. J. Loftus and A. F. Robertson, ASTM Special Technical Publication 422, pp. 166—204, 1969) contains a radiant heater which produces 2.5 W/cm$^2$ of heat at

the surface of a 7.62 cm x 7.62 cm. sample, a propane-air pilot burner and a vertical beam of light with a photomultiplier tube detector and microphotometer to record the attenuation of light by smoke developing in the chamber. During smoke testing, the chamber is sealed to enclose the combustion products and smoke. The abbreviation "Dm/gm" represents the maximum smoke generated per unit weight of the sample. "Dm" is the maximum specific optical density and gives a measure of smoke buildup during the test. Lower numbers are desired as indicating less smoke: "Dm" = 25, light smoke; 25—99, moderates smoke; 100—400, dense smoke; 400, very dense smoke.

Example 7

Another film in accordance with the present invention was formulated from the following ingredients:

| Ingredients | Amount pbw | Amount % |
|---|---|---|
| Internal plasticized resin* | 85 | 59.03 |
| Calcium carbonate filler | 30 | 20.83 |
| Acrylonitrile-butadiene rubber | 15 | 10.42 |
| Epoxidized octyl tallate | 5 | 3.47 |
| Titanium dioxide filler | 4 | 2.78 |
| Tin mercaptide | 3 | 2.09 |
| Partially oxidized poly-ethylene | 1 | 0.69 |
| Bisstearamide lubricant | 1 | 0.69 |

* a suspension grade terpolymer having a relative viscosity of about 2.72 and containing about 73.6%, by weight, vinyl chloride, about 18.2%, by weight, 2-ethylhexyl acrylate, and about 8.2%, by weight, bis(beta-chloroethyl)vinylphosphonate.

The film sample was formulated as described in Comparative Example 1 and was tested against the prior art film of Example 1 for water vapor transmission and permeance in accordance with ASTM E-96-6, Method A. The following results were obtained for both films, which were 6 mils thick, with lower values being more desirable:

| | Film from Example No. 1* | Film from Example No. 7 |
|---|---|---|
| Water vapor trans ($gm/m^2$ in 24 hours) | 6.35 | 3.78 |
| Permeance (U.S. perms) | 0.92 | 0.54 |

* Prior art film.

Example 8

This Example shows the physical properties for a series of films having a thickness of 3—4 mils with the exception of the Clash-Berg point which was determined on a 38 mil sample.

Film No. 1 was formed from the same ingredients (in the same amounts) as listed in Comparative Example 1 and represents a prior art film.

Film No. 2, in accordance with the present invention, was formed from the same ingredients (in the same amounts) as listed in Example 4 except that the concentration of epoxidized octyl tallate was increased from about 4.9%, by weight, to about 6%, by weight, in order to lower the Clash-Berg point.

Film No. 3, in accordance with the present invention, was formed from the same ingredients (in the same amounts) as listed in Example No. 5.

The following physical properties were noted:

| | Film No. | | |
|---|---|---|---|
| Property | 1* | 2 | 3 |
| Tensile str. at break (kg/cm$^2$ | 179.89 | 192.44 | 182.81 |
| Graves tear str. (kg./m. x $10^{-2}$ | 46.23 | 48.73 | 49.62 |
| Water vapor trans. (gm/m$^2$ in 24 hrs.) | 11.31 | 7.4 | 6.09 |
| Permeance (U.S. Perms) | 1.63 | 1.06 | 0.88 |
| Clash-Berg Point (°C) | —13 | —11 | —11 |

The physical property characteristics of films formed from the compositions of the present invention will vary somewhat depending, for example, upon the chemical ingredients which are used in the compositions and the type of fabrication equipment that is used to form the film. However, the following represent typical physical properties which would be obtained using the analytical tests reported in the Examples in this specification:

| Physical Property | Value(s) |
|---|---|
| Tensile Strength | 100 to 250 kg/cm$^2$ |
| Tear Strength | 30 to 65 kg/m. x $10^{-2}$ |
| Shore "A" Hardness | 77 to 95 |
| Permeability | Max. of 1.2 (U.S. Perms) |
| Clash-Berg Temperature | 0° to —25°C. |
| NBS Smoke Dm/gm (smoldering) | 15 to 40 |
| NBS Smoke Dm/gm (flaming) | 30 to 60 |
| LOI* | 29 to 31 |

* Limiting Oxygen Index, ASTM D-2863. This is a measure of the minimum percentage concentration of oxygen in an oxygen-nitrogen mixture which permits the sample to burn.

## Claims

1. The use in building construction as a vapor barrier having a tensile strength of from 100 to 250 kg/cm.$^2$; a tear strength (kg.m. x $10^{-2}$) of from 30 to 65; a Shore "A" hardness of from 77 to 95; a maximum permeance of 1.2, when tested in accordance with ASTM E-96-6, Method A; a Clash Berg temperature of from 0° to —25°C; a Limiting Oxygen Index of from 29 to 31; and NBS smoke generation values of from 15 to 40 Dm/gm in the smoldering mode and from 30 to 60 Dm/gm in the flaming mode of a calenderable, flame-retardant, heat-stabilized film-forming composition comprising:

(a) from 40 to 70%, by weight, of a polymer component comprising in excess of 45%, by weight, of the polymer component, of an internally plasticized vinyl chloride copolymer resin, having a Shore "A" hardness from 85 to 95, which comprises vinyl chloride, a $C_6$—$C_{10}$ alkyl acrylate and a bis(hydrocarbonyl) vinylphosphonate;

(b) from 0 to 35% of at least on filler material

(c) from 1 to 15%, by weight of at least one flame retardant and

(d) from 5 to 35% of at least one functional derivative selected from heat and ultraviolet stabilisers, lubricants and processing aids.

2. The use as claimed in Claim 1 wherein the polymer component is a terpolymer containing from

73 to 75%, by weight, of vinyl chloride; from 17 to 19%, by weight, of a $C_6$—$C_{10}$ alkyl acrylate and from 7 to 9%, by weight, of a bis(hydrocarbyl) vinylphosphonate.

3. The use as claimed in Claim 1 or Claim 2 wherein the $C_6$—$C_{10}$ alkyl acrylate is a 2-ethylhexyl acrylate.

4. The use as claimed in any of Claims 1 to 3 wherein the bis(hydrocarbyl) vinylphosphonate is bis(betachloroethyl) vinylphosphonate.

**Revendications**

1. L'utilisation dans la construction d'édifices, comme barrière de vapeur ayant:
une résistance à la traction de 100 à 250 kg/cm²;
une résistance à la déchirure (en kg/m x $10^{-2}$) de 30 à 65;
une dureté Shore "A" de 77 à 95;
une perméabilité maximale de 1,2 mesurée selon la norme américaine ASTM E-96-6, Mèthode A;
une température de Clash-Berg de 0°C à —25°C;
un indice de limitation d'oxygène de 29 à 31; et
des valeurs de formation de fumée NBS de 15 à 40 Dm/g en
combustion lente et de 30 à 60 Dm/g en combustion vive d'une composition pour la fabrication de films, feuilles ou pellicules, susceptible de calendrage, retardatrice de flamme et stabilisée à la chaleur, comprenant:

a) de 40 à 70% en poids d'un composant polymère comprenant plus de 45% en poids du composant polymère, d'une résine d'un copolymère de chlorure de vinyl plastifié de façon interne, ayant une dureté Shore "A" de 85 à 95 qui comprend du chlorure de vinyle, un acrylate d'alkyle en $C_6$ à $C_{10}$, et un vinylphosphonate de bis(hydrocarbyle);

b) de 0 à 35% d'au moins un produit formant charge;

c) de 1 à 15% en poids, d'au moins un retardateur de flamme; et

d) de 5 à 35% d'au moins un dérivé fonctionnel choisi parmi les stabilisants à la chaleur et aux ultraviolets, les lubrifiants et les adjuvants de traitement.

2. L'utilisant ainsi que revendiquée dans la revendication 1, dans laquelle le composant polymère est un terpolymère contenant de 73 à 75% en poids de chlorure de vinyle; de 17 à 19% en poids d'un acrylate d'alkyle en $C_6$ à $C_{10}$ et de 7 à 9% en poids d'un vinylphosphonate de bis(hydrocarbyle).

3. L'utilisant ainsi que revendiquée dans la revendication 1 ou 2, dans laquelle l'acrylate d'alkyle en $C_6$ à $C_{10}$ est l'acrylate de 2-éthylhexyle.

4. L'utilisation ainsi que revendiquée dans l'une quelconque des revendications 1 à 3, dans laquelle le vinylphosphonate de bis(hydrocarbyle) est le vinylphosphonate de bis(bétachloroéthyle).

**Patentansprüche**

1. Verwendung einer kalandrierbaren, flammhemmenden und wärmestablisierten filmbildenden Masse enthaltend

(a) 40 bis 70 Gew.-% einer Polymerkomponente, die, bezogen auf die Polymerkomponente, mindestens 45 Gew.-% eines intern weichgemachten Vinylchloridcopolymers enthält, das eine Shore A-Härte von 85 bis 95 hat und Vinylchlorid, ein $C_6$—$C_{10}$-Alkylacrylat und ein Bis-(hydrocarbyl)-vinylphosphonat enthält;

(b) 0 bis 35 Gew.-% mindestens eines Füllstoffs;

(c) 1 bis 15 Gew.-% mindestens eines flammhemmenden Mittels; und

(d) 5 bis 35 Gew.-% mindestens eines funktionellen Derivatives aus der Gruppe der Wärmestabilisatoren und UV-Stabilisatoren, Gleitmittel und Verarbeitungshilfen;

als Wasserdampfsperre im Bauwesen mit einer Zugfestigkeit von 9,8 bis 24,5 N/mm², einem Weiterreißwiderstand von 29,4 bis 63,7 N/mm, einer Shore A-Härte von 77 bis 95, mit einer maximalen Durchlässigkeit von 1,2 nach ASTM E-96-6 Verfahren A, mit einer Clash-Berg-Temperatur von 0°C bis —25°C, mit einer Sauerstoffgrenzkonzentration von 29 bis 31 und NBS-Rauchentwicklungswerten von 15 bis 50 $D_m$/g beim Schwelen und von 30 bis 60 $D_m$/g bei offenen Brennen.

2. Verwendung nach Anspruch 1, dadurch gekennzeichnet, daß die Polymerkomponente ein Terpolymer ist, das 73 bis 75 Gew.-% Vinylchlorid, 17 bis 19 Gew.-% eines $C_6$—$C_{10}$-Alkylacrylats und 7 bis 9 Gew.-% eines Bis-(hydrocarbyl)-vinyl-phosphonats enthält.

3. Verwendung nach einem der Ansprüche 1 oder 2, dadurch gekennzeichnet, daß das $C_6$—$C_{10}$-Alkylacrylat ein 2-Ethylhexylacrylat ist.

4. Verwendung nach einem der Ansprüche 1 bis 3, dadurch gekennzeichnet, daß als Bis-(hydrocarbyl)-vinyl-phosphonat Bis-(betachlorëthyl)-vinyl-phosphonat verwendet wird.